# EUROPEAN PATENT APPLICATION

(11) **EP 0 807 830 A1**
(43) Date of publication of application: **19.11.1997**
(21) Application number: 97107956.1
(22) Date of filing: 15.05.1997
(51) Int. Cl.: G01S 7/481, G02B 5/10

(54) **Optical radar device, particularly for vehicles**

(30) Priority: 17.05.1996 IT TO960413
(71) Applicant: MAGNETI MARELLI S.p.A., 20145 Milano (IT)
(72) Inventor: Innocenti, Gianfranco, 10040 Rivalta (IT); Manassero, Giorgio, 10024 Moncalieri (IT); Pairetti, Bartolo, 12032 Barge (IT); Paolini, Andrea, 10122 Torino (IT)
(74) Representative: Plebani, Rinaldo

(57) **Abstract**

A vehicle-mounted optical radar (1) including a semiconductor laser (3), a photodetector (6), and an optical beam forming system (9) having two curved mirrors (10, 11). A first mirror (10) forms the emitted beam to impart a predetermined size and angles of divergency, and directs it in the traveling direction of the vehicle; a second mirror (11) focuses the beam reflected by an obstacle on to the photodetector (6); both mirrors (10, 11) have a section with a hyperbolic profile in a first plane (β), and a section with a parabolic profile in a second plane (γ) perpendicular to the first, and may be housed in the same casing (2a) to define a substantially monostatic radar system, or in two separate spaced casings (2a, 2b) to define a substantially bistatic radar system; and an oscillating or rotary scanning system may be provided to horizontally scan the beam.

## Description

The present invention relates to an optical radar device, particularly for road vehicles.

For safety reasons, especially when visibility is poor, a driver alert System is desirable to locate hazardously close vehicles or other obstacles.

For which purpose, electromagnetic or optical radars have been devised.

A radar is a device for measuring the distance of a target (the obstacle to be located) by determining the time interval between the transmission of electromagnetic radiation by the radar and reception by the radar of the radiation reflected by the obstacle.

Optical radars normally comprise a laser source; a photodetecting device; and an optical beam forming and directing system, in turn comprising a flat reflecting mirror for receiving the radiation emitted by the laser and by one or more lenses through which the beam received and reflected by the flat mirror travels. A similar lens and flat mirror system receives the radiation reflected by the obstacle and focuses it on to the photodetecting device.

So structured, however, the above system presents the drawback of being fairly bulky, mainly on account of the space occupied by the lenses and the space necessarily separating the lenses and the flat mirrors.

Moreover, as each optical element inevitably reduces the intensity of the electromagnetic beam traveling through it, the presence of lenses impairs the efficiency of the system, as well as the optical quality of the beam due to aberration phenomena.

Finally, on account of the complex design of the system and critical alignment of the lenses and mirrors, fairly complex calibration operations are required, and the system is prone to frequent breakdown or impaired efficiency as a result of the severe in-service stress to which it is subjected (vibration, jolting over rough road, etc.).

It is an object of the present invention to provide an optical radar device designed to overcome the aforementioned drawbacks, and which in particular is compact and provides for a high degree of reliably.

According to the present invention, there is provided an optical radar device, in particular for vehicles, comprising emitting means for emitting a first electromagnetic beam on to a target; detecting means for detecting a second electromagnetic beam generated by reflection of said first beam by the target; and beam forming means for imparting a given path and given direction to said first beam, and for receiving and focusing said second beam on to said detecting means; characterized in that said beam forming means comprise at least one reflecting element having optical power.

A preferred, non-limiting embodiment of the present invention will be described by way of example with reference to the accompanying drawings, in which:
Figure 1 shows an overall operating diagram of an optical radar in accordance with the present invention and housed inside the front headlights of a vehicle;
Figure 2 shows a vertical section of a substantially monostatic optical radar according to the present invention;
Figure 3 shows a horizontal section of the optical radar in Figure 3;
Figure 4 shows a view in perspective of a curved mirror forming part of the beam focusing means of the Figure 1 radar;
Figure 5 shows a schematic vertical section of an embodiment of the radar according to the invention comprising a mirror actuating system for horizontally scanning the laser beam;
Figure 6 shows a horizontal section of the Figure 5 device.

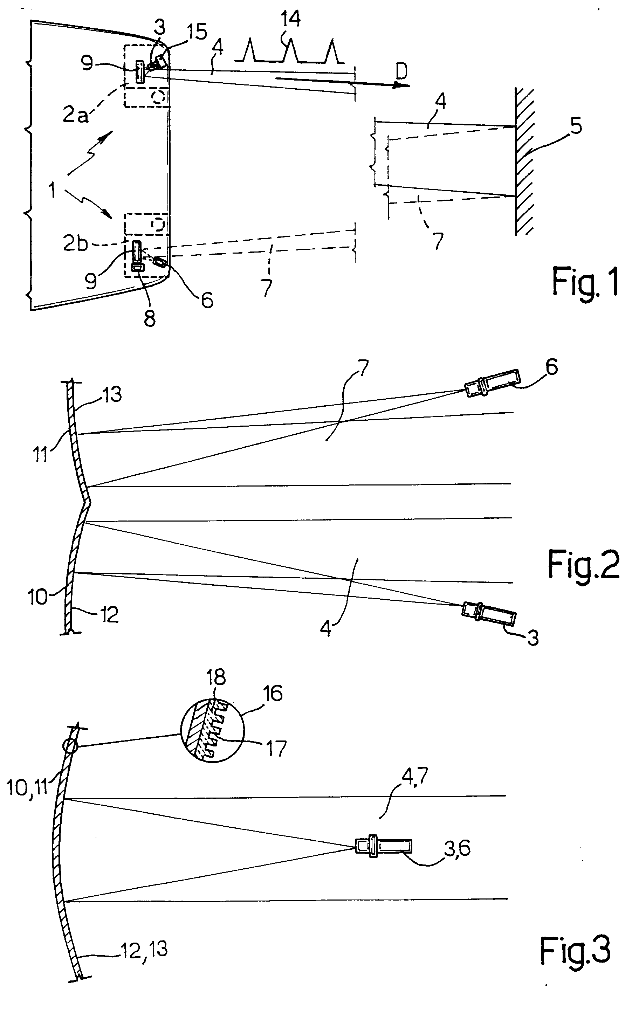

Number 1 in Figure 1 indicates a known optical radar housed, according to one aspect of the present invention, inside two vehicle headlights 2a, 2b. Radar 1 comprises a laser diode 3 for generating a first electromagnetic beam 4; a photodetector 6 for detecting a second electromagnetic beam 7 generated by reflection of first beam 4 by a target 5; and an optical beam forming system 9 for directing first beam 4 in a given direction along a propagation path D (indicated by the arrow) and focusing second beam 7 on to photodetector 6, which is connected to a processing system 8 for supplying data relative to the distance of the detected target.

Crosswise to propagation path D, first beam 4 comprises elliptical sections with different angles of divergency along the two optical axes. Preferably, first beam 4 comprises a train of pulses 14, of predetermined duration, frequency and power, generated by a pulsing system 15, but, according to a variation not shown, may also be a continuous modulated beam.

Second beam 7 comprises a portion of first beam 4 reflected by target 5 and within an optical cone of given size determined by beam forming system 9 and in turn defining the receiving "field".

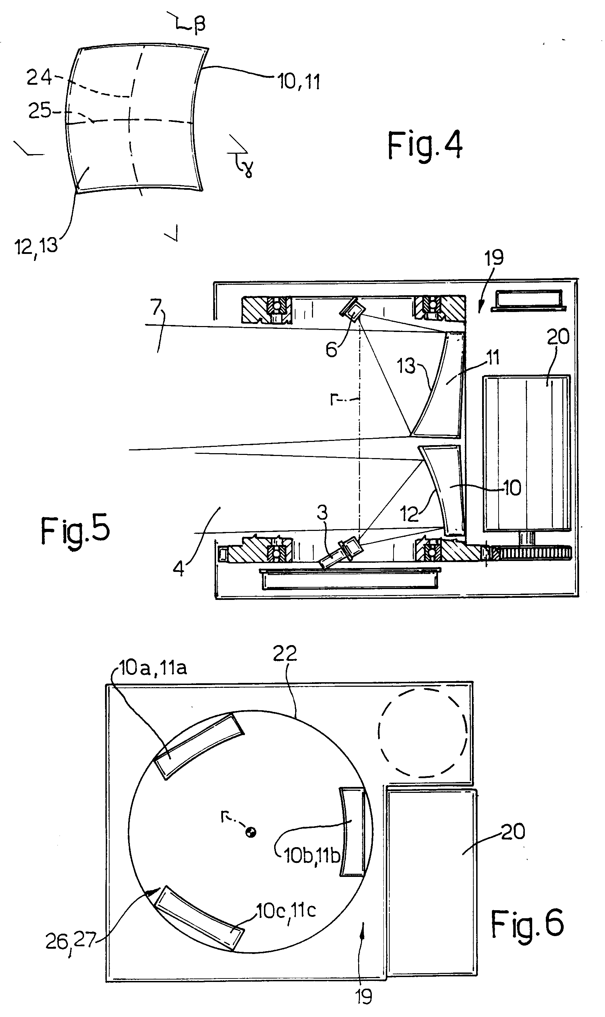

In the non-limiting embodiment shown in Figures 2 and 3, beam forming system 9 comprises two curved mirrors 10, 11 with respective reflecting surfaces 12, 13, which are so shaped as to have a hyperbolic profile in each vertical section, and a parabolic or hyperbolic profile in each horizontal section, as shown in Figure 4, wherein a vertical section plane β and a horizontal section plane γ cut reflecting surfaces 12, 13 of mirrors 10, 11 along a first hyperbolic curve 24 and a second parabolic or hyperbolic curve 25 respectively.

According to a variation not shown, reflecting surfaces 12, 13 may also be obtained by rotating a parabolic surface about its axis of symmetry.

The profiles of curved mirrors 10, 11, i.e. of reflecting surfaces 12, 13, are shown more clearly in the vertical and horizontal sections in Figures 2 and 3, and are such as to obtain predetermined angles of divergency of first beam 4 and to define said receiving field.

More specifically, when reflected by mirror 10, first beam 4 in the Figure 2 and 3 sections respectively defines angles of divergency α_{elev,Tx} and α_{azimuth,Tx}, and the receiving field is defined respectively by angles α_{elev,Rx} and α_{azimuth,Rx}.

Angle α_{elev,Tx} is preferably much greater than angle α_{azimuth,Tx} to obtain a horizontally narrow, vertically wide beam. As will be seen later on, a horizontally narrow beam is advantageous in the case of a scanning radar, by also enabling information to be obtained concerning the location and size of the target in the scanning plane, e.g. the horizontal plane in the case of a ground vehicle.

According to a variation shown in Figure 3, the same results obtained using curved mirrors of the type described are also obtainable using diffracting optics 16 on reflecting surfaces 12, 13 of mirrors 10, 11.

Diffracting optics 16 provide for directing the beam in predetermined directions and varying its physical properties and intensity, depending on how they are structured. More generally speaking, the capacity of an optical component to vary certain basic quantities of an electromagnetic beam, such as form, intensity and direction of propagation, is known as "optical power".

Diffraction optics 16 may comprise a matrix of adjacent diffracting microoptics 17, and may either be formed on a film of transparent material 18 bonded to reflecting surfaces 12, 13 of mirrors 10, 11, or directly on reflecting surfaces 12, 13 themselves.

Relief diffracting optics, e.g. computer-generated holograms, are one example of diffracting optics which may be used for the optical radar of the invention.

Beams 4 and 7 may be modified as required by the device according to the invention using curved mirrors of the type described with or without diffracting optics, or flat mirrors with diffracting optics.

According to the preferred embodiment of the invention, the optical radar device is installed inside one of the vehicle headlights in a substantially monostatic configuration.

Alternatively, the device may be divided into two subassemblies, one containing the emitting part of the radar (laser 3 and first curved mirror 10), and the other containing the receiving part (second curved mirror 11 and photodetector 6); and each subsystem is housed inside a respective headlight 2a, 2b in a substantially bistatic configuration.

As shown in the Figure 5 and 6 variations, the optical radar may be equipped with a beam scanning system 19 wherein actuating and supporting means 20 and 22 move the mirrors with respect to laser 3 and photodetector 6, which are fixed.

More specifically, as shown by the dotted line in Figure 5, mirrors 10, 11 may be mounted to swing about an axis r through both laser 3 and photodetector 6; and a motor 20 provides, in a manner not shown, for oscillating mirrors 10, 11 about a balance position.

In the rotary system shown by the continuous line in Figures 5 and 6, two numbers of mirrors 10a, 10b, 10c and 11a, 11b, 11c similar to those in Figures 2, 3 and 4 are equally spaced and respectively arranged in a first and in a second circle (26, 27) inside a drum 22 controlled by a motor 20 and rotating about axis r.

In actual use, first electromagnetic beam 4 emitted by laser 3 and reflected by mirror 10 travels along path D and gets wider by angles α_{elev,Tx} and α_{azimuth,Tx} in the directions defined by its optical axes; and mirror 11 focuses second beam 7 on photodetector 6, which converts the light signal into and electric signal and transmits it to processing system 8.

In optical beam scanning radars, the oscillation of mirrors 10 and 11 in the variation shown by the dotted line in Figure 5, or rotation of mirrors 10a, 10b, 10c and 11a, 11b, 11c in the preferred embodiment in Figures 5 and 6 provides for horizontally scanning first beam 4.

The angular resolution of the optical radar is determined by the oscillation speed (swing system) or rotation speed (Figure 6 system) of the mirrors, which is understandable in the case of pulsed radars, the angular resolution of which is determined by the angle between two successive pulses and which is proportional to the speed of the mirrors.

The advantages of the device according to the present invention are as follows.

The curved mirrors described (or at any rate mirrors having optical power by virtue of diffracting optics 16) provide for eliminating the lenses of optical radars, which are thus simplified, made more compact, and may therefore be installed in confined spaces, such as headlights or fog lights.

Eliminating the lenses also provides for improvements in terms of performance by reducing system losses and aberration.

Finally, the simplicity of the system also affords obvious advantages in terms of calibration, as well as greater reliability.

Clearly, changes may be made to the optical radar as described and illustrated herein without, however, departing from the scope of the present invention.

## Claims

1. An optical radar device, in particular for vehicles, comprising emitting means (3) for emitting a first electromagnetic beam (4) on to a target (5); detecting means (6) for detecting a second electromagnetic beam (7) generated by reflection of said first beam (4) by the target (5); and beam forming means (9) for imparting a given path and given direction to said first beam (4), and for receiving and focusing said second beam (7) on to said detecting means (6); characterized in that said beam forming means (9) comprise at least one reflecting element (10, 11) having optical power.

2. An optical radar device as claimed in Claim 1, characterized in that said beam forming means comprise at least two other than flat mirrors (10, 11), one for receiving said first beam (4), and one for receiving said second beam (7).

3. An optical radar device as claimed in Claim 2, characterized in that said other than flat mirrors (10, 11) each comprise a curved reflecting surface (12, 13) generated by translating a first curve (24) lying in a first plane (β) along a second curve (25) lying in a second plane (γ).

4. An optical radar device as claimed in Claim 3, characterized in that said first plane (β) and said second plane (γ) are perpendicular to each other.

5. An optical radar device as claimed in Claim 3 or 4, characterized in that said first curve (24) is a hyperbola.

6. An optical radar device as claimed in one of the foregoing Claims from 3 to 5, characterized in that said second curve (25) is a hyperbola.

7. An optical radar device as claimed in one of the foregoing Claims from 3 to 5, characterized in that said second curve (25) is a parabola.

8. An optical radar device as claimed in any one of the foregoing Claims from 3 to 7, characterized in that said first plane (β) is vertical.

9. An optical radar device as claimed in any one of the foregoing Claims from 3 to 8, characterized in that said first (24) and second (25) curves are such that said first beam (4) has a predetermined angle of divergency in a vertical plane, and is substantially collimated in a horizontal plane.

10. An optical radar device as claimed in Claim 2, characterized in that said other than flat mirrors (10, 11) each comprise a curved reflecting surface (12, 13) generated by rotation of a parabola.

11. An optical radar device as claimed in any one of the foregoing Claims from 2 to 10, characterized in that at least one of said mirrors (10, 11) comprises one or more diffracting optics (16) on the reflecting surface (12, 13).

12. An optical radar device as claimed in Claim 1, characterized in that said beam forming means (9) comprise at least two reflecting elements (10, 11), each having a substantially flat reflecting surface (12, 13) with one or more diffracting optics (16).

13. An optical radar device as claimed in Claim 11 or 12, characterized in that said diffracting optics (16) comprise a matrix of adjacent diffracting microoptics (17).

14. An optical radar device as claimed in one of the foregoing Claims from 11 to 13, characterized in that said diffracting optics (16) are relief diffracting optics, e.g. computer-generated holograms.

15. An optical radar device as claimed in Claim 14, characterized in that said diffracting optics (16) are formed directly on said reflecting surface (12, 13).

16. An optical radar device as claimed in Claim 14, characterized in that said diffracting optics (16) are formed on a film of transparent material (18) bonded to said reflecting surface (12, 13).

17. An optical radar device as claimed in any one of the foregoing Claims, characterized by comprising scanning means (19) for scanning said at least one reflecting element (10, 11).

18. An optical radar device as claimed in Claim 17, characterized in that said at least one reflecting element (10, 11) is mounted to swing about a reference axis (r) through both said emitting means (3) and said detecting means (6); said scanning means (19) comprising drive means (20) for swinging said at least one reflecting element (10, 11) back and forth about said reference axis (r) and along an arc of predetermined magnitude.

19. An optical radar device as claimed in Claim 17, characterized in that said scanning means (19) comprise a drum (22) positioned with a rotation axis (r) through both said emitting means (3) and said detecting means (6); and drive means (20) for rotating said drum (22); said device (1) comprising a first (10a, 10b, 10c) and a second (11a, 11b, 11c) number of reflecting elements having optical power and respectively arranged in a first and second circle (26, 27) inside said drum (22).

20. An optical radar device as claimed in Claim 19, characterized in that said first and said second circle (26, 27) each comprise at least three equally spaced said reflecting elements (10a, 10b, 10c; 11a, 11b, 11c).

21. An optical radar device as claimed in any one of the foregoing Claims, characterized by comprising an optical beam pulsing system (15) for generating a train of electromagnetic radiation pulses (14) of predetermined duration, frequency and power.

22. An optical radar device as claimed in any one of the foregoing Claims, characterized by being installed inside a headlight (2a, 2b) of the vehicle.

23. An optical radar device as claimed in any one of the foregoing Claims from 1 to 21, characterized by being installed partly inside a first headlight (2a) and partly inside a second headlight (2b) on the same side of the vehicle, so as to define a substantially bistable system.

24. An optical radar device as claimed in Claim 23, characterized in that said emitting means (3) and a first (10) said reflecting element having optical power are installed inside said first headlight (2a), and said detecting means (6) and a second (11) said reflecting element having optical power are installed inside said second head light (2b).
